# EUROPEAN PATENT APPLICATION

(11) **EP 3 232 363 A1**
(43) Date of publication of application: **18.10.2017**
(21) Application number: 14907745.5
(22) Date of filing: 09.12.2014
(51) Int. Cl.: G06F 21/62, G06F 21/33

(54) **INFORMATION PROCESSING DEVICE, METHOD FOR CONTROLLING INFORMATION PROCESSING DEVICE, INFORMATION PROCESSING SYSTEM, AND COMPUTER PROGRAM**

(71) Applicant: Canon Kabushiki Kaisha, Tokyo 146-8501 (JP)
(72) Inventor: NAKANO, Yu, Tokyo 146-8501 (JP)
(74) Representative: Uffindell, Christine Helen
(86) International application number: PCT/JP2014/082527
(87) International publication number: WO 2016/092630

(57) **Abstract**

An object of the present invention is to set an adequate access right to a storage server, for a client in a system including multiple servers including the storage server.

The present invention provides an information processing apparatus which is capable of communicating with a client. The client accesses a storage server and a first server which is different from the storage server. The information processing apparatus includes receiving means, generating means, and transmitting means. The receiving means receives information about a first access right from the client. The information about the first access right is used for the client to access the first server. The generating means generates information about a second access right on the basis of the information about the first access right. The information about the second access right is used for the client to access the storage server. The transmitting means transmits the information about the second access right to the client.

## Description

### Technical Field

The present invention relates to an information processing apparatus which is capable of communicating with a client accessing a server, a control method for the information processing apparatus, an information processing system, and a computer program.

### Background Art

Recently, a server providing a service offered on the Internet needs to store private information typified by user personal information and content, such as photographs and movies which are created by a user, in a safe manner.

To do this, restriction of an access right to a server providing a service needs to be set for each user (client apparatus). To restrict an access right, an access-right issuing server issuing an access right which is set for each user is typically introduced. When a client receives provision of a service, the client is given an access right from the access-right issuing server apparatus, accesses the server apparatus which provides the service, and requests provision of the service. When the access right is valid, the server responds to the request. The protocol for obtaining an access right from the access-right issuing server and the format of an access right depend on a method of issuing an access right.

Examples of a standard specification of the method of issuing an access right include OAuth 2.0 and OpenID Connect which is an extension of OAuth 2.0. These standard specifications have been already employed in various services on the Internet. In the OAuth 2.0 protocol, an access right to be issued is expressed by using a string called an access token. The access token is associated with a string called scope indicating a permission range. Further, the access token may be associated with various types of information other than the scope. Examples of the information associated with the access token include a term of validity of the access token and the ID of an issuer which has issued the access token. A server which provides a service on the basis of the OAuth 2.0 specification checks validity and a permission range of a received access token on the basis of the values of the term of validity and the scope of the access token, and determines whether or not the access token is valid.

An access-right issuing server which does not employ a standard specification such as OAuth 2.0 issues an access right by using an original specification. An example of the server which issues an access right by using an original specification is a storage server. When a server to be accessed is a storage server, complicated processes, for example, of imposing restriction on operations, such as reading and writing, and of specifying a specific file path allowed to be accessed on a storage need to be performed by using the original specification.

A storage server is often employed when a relatively large amount of data is transmitted between clients and servers. The reason for employing a storage server is as follows. Since the servers other than the storage server do not need to manage the transmission of data, performance required for each server is low, achieving suppression in cost of server operation. Further, data in the storage server may be directly accessed. Therefore, data does not pass through the servers other than the storage server, enabling complicated processing to be performed on the data.

In PTL 1, a technique for setting storage-server access permission for each user-operated terminal is disclosed. Specifically, a permitted operation and a file path, for which an operation may be performed, in a storage server are set for each user-operated terminal ID.

In PTL 2, a technique of a communication media card accessing a storage server via a relay server is disclosed. Specifically, the relay server sets authentication information of the storage server and the path of a directory allowed to be accessed, for each communication-media-card terminal ID.

### Citation List

### Patent Literature

- PTL 1:: Japanese Patent Laid-Open No. 2007-034386
- PTL 2:: Japanese Patent Laid-Open No. 2012-079267

### Summary of Invention

### Technical Problem

As described above, employment of a storage server has many advantages. However, the storage server may store user personal information and private information. Therefore, it is necessary to impose restriction of access to the storage server on a client adequately.

However, the technique disclosed in PTL 1 sets a precondition that the entire system is controlled by using a single access right. Therefore, certain access permission for the storage server is set for terminals.

In PTL 2, association which is set between authentication information of a terminal user for a web server and that for a storage server is disclosed. Similarly to PTL 1, certain access permission for the storage server is set.

In the related art, a system having multiple servers including a storage server fails to set an adequate access right to the storage server for a client. Therefore, excessive access permission may be set for a client, resulting in a failure to provide adequate protection of data stored in the storage server.

The present invention has been made in view of the examples of the related art which are described above, and an object thereof is to set an adequate access right to a storage server for a client in a system having multiple servers including the storage server.

### Solution to Problem

To attain the above-described object, the present invention provides an information processing apparatus which is capable of communicating with a client. The client accesses a storage server and a first server which is different from the storage server. The information processing apparatus includes receiving means, generating means, and transmitting means. The receiving means receives information about a first access right from the client. The information about the first access right is used for the client to access the first server. The generating means generates information about a second access right on the basis of the information about the first access right. The information about the second access right is used for the client to access the storage server. The transmitting means transmits the information about the second access right to the client.

### Advantageous Effects of Invention

The present invention enables an adequate access right to a storage server to be set for a client in a system having multiple servers including the storage server. Brief Description of Drawings

[Fig. 1] Fig. 1 is a diagram illustrating the configuration of an information processing system according to a first embodiment.
[Fig. 2] Fig. 2 is a diagram illustrating the hardware configuration of an information processing apparatus according to the first embodiment.
[Fig. 3] Fig. 3 is a diagram illustrating the process flow of the entire system.
[Fig. 4] Fig. 4 illustrates exemplary management tables held by an authentication authorization server 102 according to the first embodiment.
[Fig. 5] Fig. 5 includes diagrams illustrating a specific example of acquisition requests and their responses.
[Fig. 6] Fig. 6 is a diagram illustrating the configuration of a server which mediates an access right.
[Fig. 7] Fig. 7 is a diagram illustrating a storage-access-range management table.
[Fig. 8] Fig. 8 is a diagram illustrating the process flow of requesting acquisition of a storage access right.
[Fig. 9] Fig. 9 is a diagram illustrating exemplary authorization token information.
[Fig. 10] Fig. 10 is a diagram illustrating the process flow of determining a storage access range.
[Fig. 11] Fig. 11 is a diagram illustrating the configuration of a server which mediates an access right in a second embodiment.
[Fig. 12] Fig. 12 is a diagram illustrating a storage-access-right management table according to the second embodiment.
[Fig. 13] Fig. 13 illustrates the process flow of requesting acquisition of a storage access right according to the second embodiment.
[Fig. 14] Fig. 14 is a diagram illustrating the configuration of a server which mediates an access right according to the second embodiment.
[Fig. 15] Fig. 15 illustrates the process flow of requesting change in settings of a storage access range according to a third embodiment.
[Fig. 16] Fig. 16 is a diagram illustrating an exemplary request for change in setting of a storage access range according to the third embodiment.

### Description of Embodiments

Referring to the attached drawings, embodiments will be described in detail below. The configurations indicated in the embodiments described below are merely examples. The present invention is not limited to the illustrated configurations.

### (FIRST EMBODIMENT)

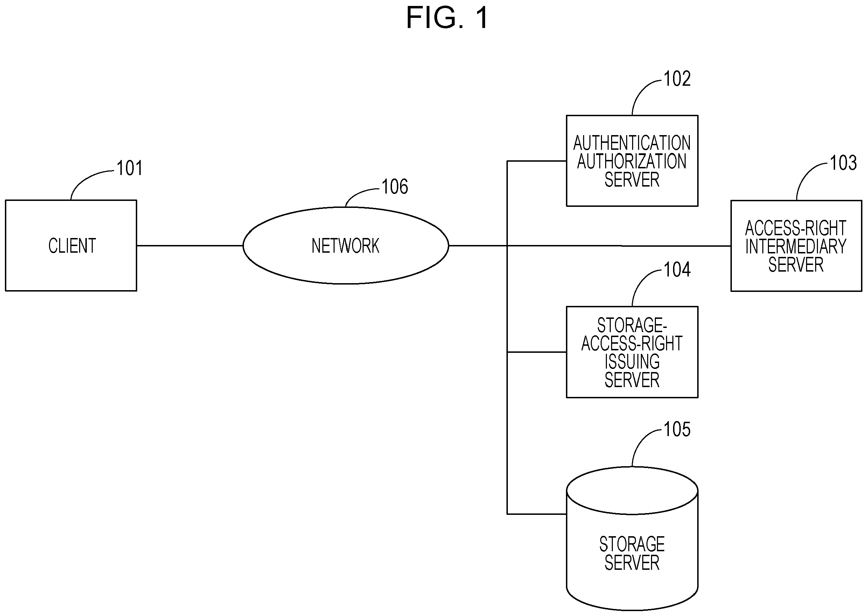

By using Fig. 1, the configuration of an information processing system according to the present embodiment will be described.

The information processing system according to the present embodiment includes a client 101, an authentication authorization server 102, an access-right intermediary server 103, a storage-access-right issuing server 104, and a storage server 105.

The client 101 is capable of communicating with the authentication authorization server 102, the access-right intermediary server 103, and the storage server 105 via a network 106. The authentication authorization server 102, the access-right intermediary server 103, and the storage-access-right issuing server 104 are capable of communicating with each other via the network 106.

The client 101 is an information processing apparatus which performs file operations, such as uploading and downloading files, on the storage server 105. When the client 101 is to perform an operation on the storage server 105, the client 101 first obtains an authorization token from the authentication authorization server 102. An authorization token indicates an access right or an access range for a server providing a service, such as a web server. The client 101 obtains an authorization token, thereby obtaining a capability of accessing each server. After obtaining the authorization token, the client 101 uses the access-right intermediary server 103 to obtain an access right, which corresponds to the authorization token, to the storage server 105.

The authentication authorization server 102 is a server which holds data about authentication, such as an ID and a password, and authorization, and which issues the above-described authorization token to the client 101. In the present embodiment, it is assumed that the authentication authorization server 102 conforms to an authorization protocol of OAuth 2.0. However, the authentication authorization server 102 may conform to another authorization protocol such as OpenID Connet. The authentication authorization server 102 also includes a function of providing correspondence information of an authorization token for the above-described web server. Correspondence information of an authorization token is information indicating a term of validity of the authorization token and the permission scope of the authorization token. To check validity of an authorization token held by the client 101, the web server may obtain correspondence information of the authorization token from the authentication authorization server 102.

The access-right intermediary server 103 is a server which obtains an access right and an access range for the storage server 105 from the storage-access-right issuing server 104 on the basis of the issued authorization token. The access-right intermediary server 103 holds information indicating a correspondence relationship between an authorization token issued by the authentication authorization server 102 and an access right to the storage server 105.

The storage-access-right issuing server 104 is a management server which issues and manages an access right and an access range (storage access right) for the storage server 105. A storage access right is issued on the basis of an acquisition request transmitted from the access-right intermediary server 103. An operation, such as reading or writing, a file path for which an operation is permitted, and the like are set in an access range to be issued.

The storage server 105 is a server which stores and manages data such as files. When a storage access right is transmitted from the client 101, the storage server 105 verifies the transmitted storage access right. As a result of the verification, when the storage access right is valid, the storage server 105 permits access to a stored file in response to the request from the client 101.

In the present embodiment, it is assumed that HTTP (Hypertext Transfer Protocol) is used as a communication protocol in the system. However, a communication protocol other than HTTP may be used. Further, multiple types of communication protocols may be used in the system.

In Fig. 1, it is assumed that one client 101, one authentication authorization server 102, one access-right intermediary server 103, and one storage-access-right issuing server 104 are present. However, the number of apparatuses does not need to be one. In addition, in Fig. 1, the authentication authorization server 102, the access-right intermediary server 103, and the storage-access-right issuing server 104 are separate servers. However, the functions included in these servers may be integrated into one server. For example, a configuration may be employed in which the functions of the authentication authorization server 102 and the access-right intermediary server 103 are included in the same server.

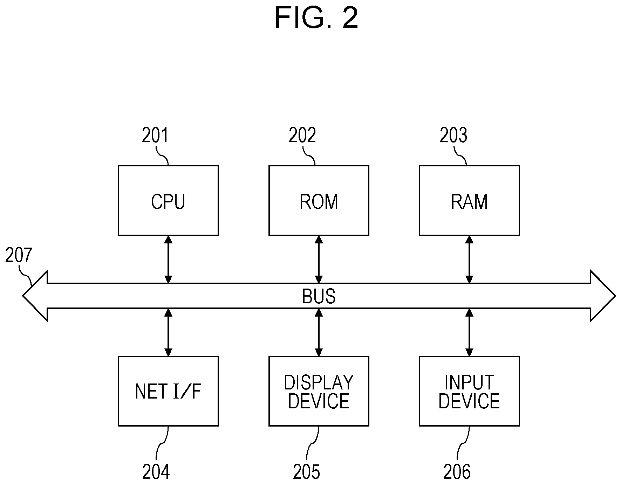

By using Fig. 2, the hardware configuration of an information processing apparatus according to the present embodiment will be described. An information processing apparatus according to the present embodiment is the client 101, the authentication authorization server 102, the access-right intermediary server 103, the storage-access-right issuing server 104, or the like. As illustrated, an information processing apparatus is provided with a CPU (Central Processing Unit) 201, a ROM (Read Only Memory) 202, a RAM (Random Access Memory) 203, and the like as a hardware configuration. Further, the information processing apparatus is also provided with a NET I/F (Network Interface) 204, a display device 205, an input device 206, a bus 207, and the like.

The CPU 201 is a processing device which controls the devices connected to the bus 207. The CPU 201 performs various processes described below in the client 101, the authentication authorization server 102, the access-right intermediary server 103, and the storage-access-right issuing server 104. The ROM 202 is a storage medium that stores an operating system with which basic control of the computer is performed, operating programs, and the like. The RAM 203 is a storage device which serves as a work memory of the CPU 201 and which stores operating programs themselves and data necessary for the operating programs. The CPU 201 stores, in the RAM 203, various computer programs stored in the ROM 202, and executes the various computer programs.

The NET I/F 204 is an interface for controlling transmission of information from/to an external apparatus connected via a network. Each of the client 101, the authentication authorization server 102, the access-right intermediary server 103, and the storage-access-right issuing server 104 receives/transmits data via the NET I/F 204. The display device 205 is a device for displaying a processing result of the CPU 201, and is constituted by a liquid crystal display, an organic EL display, or the like.

The input device 206 is a device for receiving input from a user physically, and is constituted by a keyboard and a mouse, or a touch panel. When a display with a touch panel is used, the display device 205 and the input device 206 are integrated into one device. A display device 205 and an input device 206 which are external devices may be used via the NET I/F 204. In this case, a configuration is employed in which the display device 205 and the input device 206 are not included.

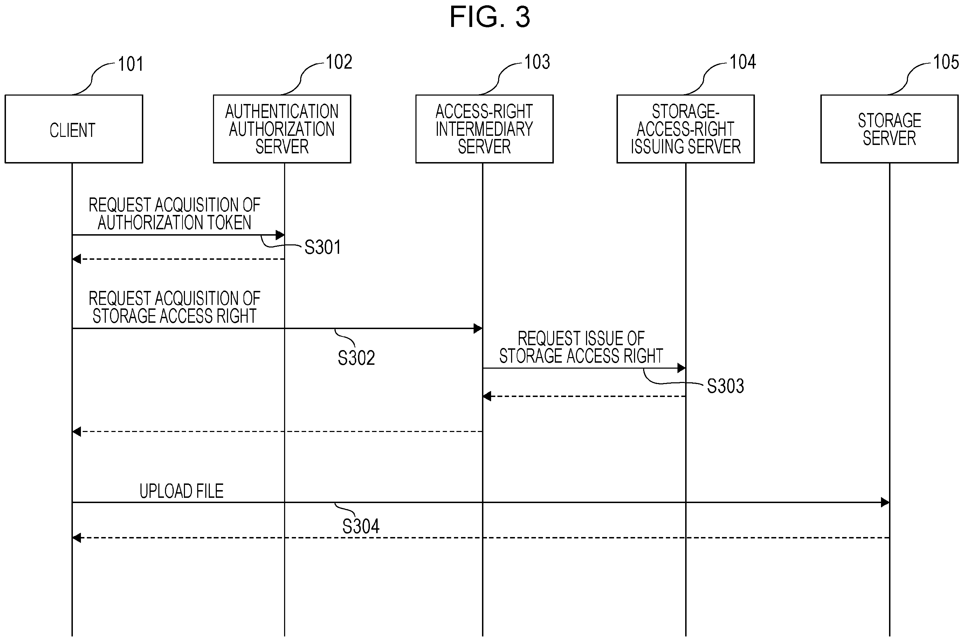

By using Fig. 3, the specific process flow performed when the client 101 directly accesses the storage server 105 in the present embodiment will be described. The process flow in Fig. 3 describes uploading of a file as an exemplary process performed when the storage server 105 is accessed. Even when another operation such as downloading of a file is performed, a process flow similar to that in Fig. 3 is performed.

### (STEP S301)

Step S301 is a step in which the client 101 requests the authentication authorization server 102 to obtain an authorization token and obtains the authorization token from the authentication authorization server 102. In transmission of a request for acquisition, authentication information is transmitted to the authentication authorization server 102 which supplies an authorization token according to the authentication information.

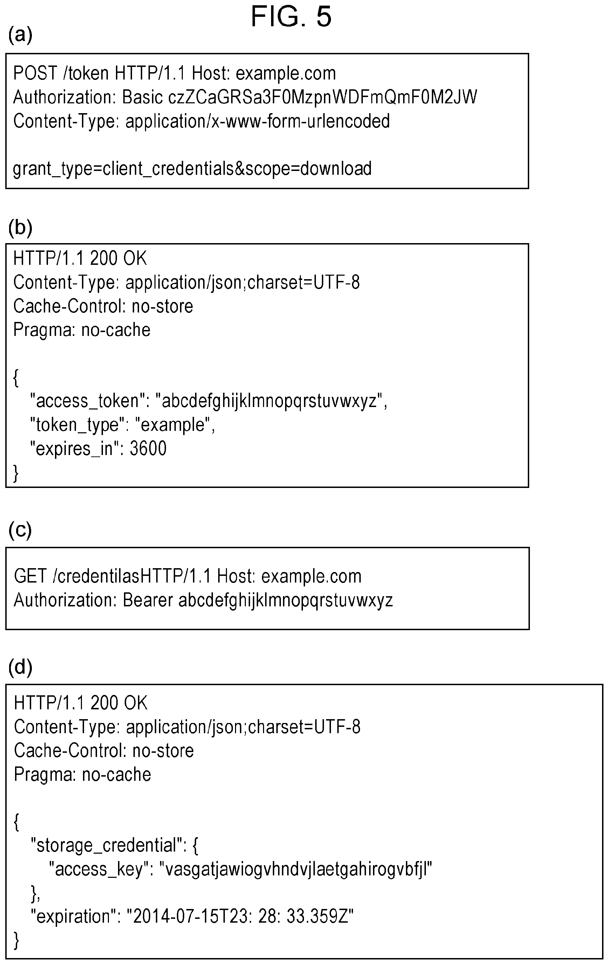

The request for acquisition of an authorization token and its response (authorization token) have a different format and a different value depending on the type of the process of issuing an authorization token. Figs. 5(a) and 5(b) are diagrams illustrating an example of a request for acquisition of an authorization token and its response.

Fig. 5(a) illustrates an exemplary request for acquisition of an authorization token, based on the process of issuing an authorization token in the OAuth 2.0 Client Credentials Grant. Authentication information necessary to issue an authorization token is added in the Authorization header. In the example in the figure, Basic authentication is used to transmit the client ID and the client secret of a client. The scope of the authorization token is added to the body of the request. Further, the identifier of the type of the process of issuing an authorization token is added as grant_type to the body of the request.

In Fig. 5(a), the type of the process of issuing an authorization token is set as Client Credentials Grant. However, another type other than Client Credentials Grant may be used.

When an authorization flow other than Client Credentials Grant is used, for example, information which is called an authorization code issued when a user approves issue of an authorization token is additionally required.

Fig. 5(b) illustrates an exemplary response (authorization token) to the request for acquisition of an authorization token in Fig. 5(a). The data access_token included in the response body indicates the value of the authorization token. The data token_type indicates the type of the authorization token, and the data expires_in indicates a remaining time until the authorization token becomes invalid.

In Fig. 5(b), the time unit in the data expires_in is a second. However, a unit other than a second may be used. The response may include attribute information other than those described above.

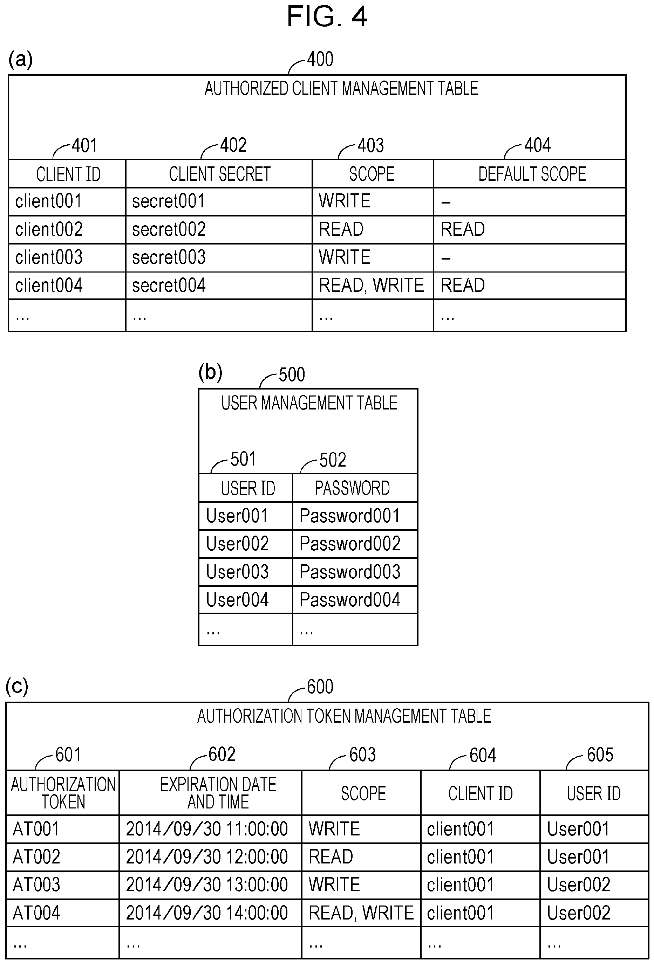

When an authorization token is to be issued, the authentication authorization server 102 uses management tables illustrated in Fig. 4. As illustrated, in an authorized client management table 400 in Fig. 4(a), a client ID 401 and a client secret 402 which are information for authenticating a client, and scope 403 are recorded so as to be associated with each other. Therefore, the authentication authorization server 102 may refer to the client management table 400 so as to check whether or not a request for acquisition of an authorization token is valid. When the authentication information in the request for acquisition of an authorization token matches authentication information registered in the client management table 400, the authentication authorization server 102 regards the acquisition request as being valid. The authentication authorization server 102 obtains scope which is encompassed in the scope in the request for acquisition of an authorization token, from the scope 403 corresponding to the authentication information, and generates an authorization token. The client secret 402 in authentication information may be encrypted and stored, not in plain text. When authentication information is constituted by a user ID and a password, the authentication authorization server 102 refers to a user management table 500 in which a user ID 501 and a password 502 are recorded so as to be associated with each other.

The management table 400 includes default scope 404. The default scope 404 is used when a request for acquisition of an authorization token does not include scope. That is, when scope is not included in a request for acquisition of an authorization token, an authorization token is generated by using the default scope 404, not by using the scope 403. Multiple pieces of scope information may be specified in the scope 403 and the default scope 404.

When the authentication authorization server 102 generates an authorization token, information about the generated authorization token is registered in an authorization token management table 600. For each authorization token 601, an expiration date and time 602, scope 603, and a client ID 604 of the authorized client which has issued the authorization token 601 are recorded in the authorization token management table 600. The authorization token 601 whose expiration date and time 602 has come may be deleted from the authorization token management table 600. When a request for acquisition of an authorization token includes information about a user ID 605 of a user, the user ID 605 is also stored.

A request for acquisition of an authorization token which is described above may include both of the authentication information of a user and the authentication information of an authorized client. Alternatively, the authentication information of an authorized client and the authentication information of a user may be transmitted step by step. For example, the authentication information of a user is first transmitted, and, only when the authentication information of the user is valid, the authentication information of an authorized client may be subsequently transmitted.

### (STEP S302)

In step S302, the client 101 transmits the authorization token obtained in step S301 to the access-right intermediary server 103, and obtains an access right for accessing the storage server 105. The process flow performed by the access-right intermediary server 103 in this step will be described below.

### (STEP S303)

In step S303, the access-right intermediary server 103 obtains an access right to the storage server 105 according to the authorization token transmitted by the client 101, from the storage-access-right issuing server 104.

Figs. 5(c) and 5(d) illustrate a specific example of a request for acquisition of a storage access right and its response. Fig. 5(c) illustrates an exemplary request for acquisition of a storage access right, which is transmitted by the access-right intermediary server 103 to the storage-access-right issuing server 104. The string included in the Authorization header is the same as that included in the authorization token obtained in step S301.

Fig. 5(d) illustrates an exemplary response to the request of acquisition of a storage access right in Fig. 5(c). The storage access right is included as the data storage_credential in the response. The format of a storage access right is different depending on the type or the specification of the storage server 105. Therefore, an attribute included in the data storage_credential needs to be changed in accordance with the type or the specification of the storage server 105. For example, when an access right to the storage server 105 is set as a combination of an ID and a password, an ID and a password are included in the data storage_credential. As registered in the data expiration in Fig. 5(d), an expiration date and time of the storage access right may be set. In Figs. 5(c) and 5(d) described above, the request for acquisition of a storage access right and its response are described in the json format, but may be described in another format such as XML.

### (STEP S304)

In step S304, the client 101 uses the storage access right obtained in step S202 to access the storage server 105, and performs various file operations. The access right includes information about a file path allowed to be accessed in the storage of the storage server 105. In the example in Fig. 3, a file is uploaded. When the upload is successfully performed, a response indicating that the upload has been successfully performed is transmitted from the storage server 105 to the client 101.

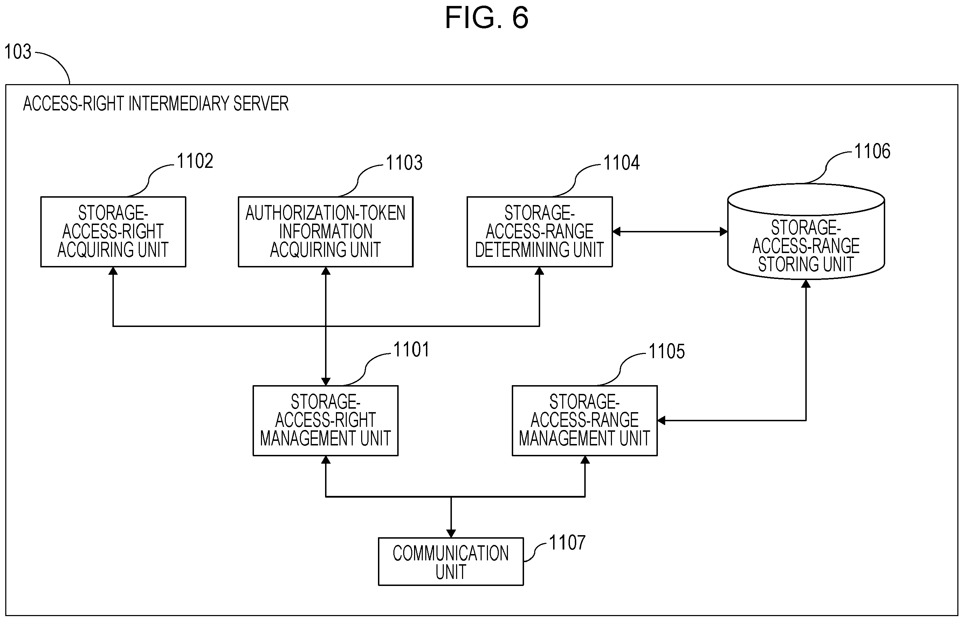

By using Fig. 6, an exemplary configuration of the functions of the access-right intermediary server 103 according to the present embodiment will be described. As described above, the access-right intermediary server 103 transmits a request for acquisition of a storage access right to the storage-access-right issuing server 104, and transmits its response to the client 101.

A storage-access-right management unit 1101 uses a storage-access-right acquiring unit 1102 to obtain a storage access right from the storage-access-right issuing server 104, on the basis of an authorization token transmitted from the client 101. The storage-access-right management unit 1101 transmits a storage access right obtained from the storage-access-right issuing server 104 to the client 101. The storage-access-right management unit 1101 obtains information about the received authorization token by using an authorization-token information acquiring unit 1103. The storage-access-right management unit 1101 uses a storage-access-range determining unit 1104 to determine the permission range of a storage access right that is to be issued.

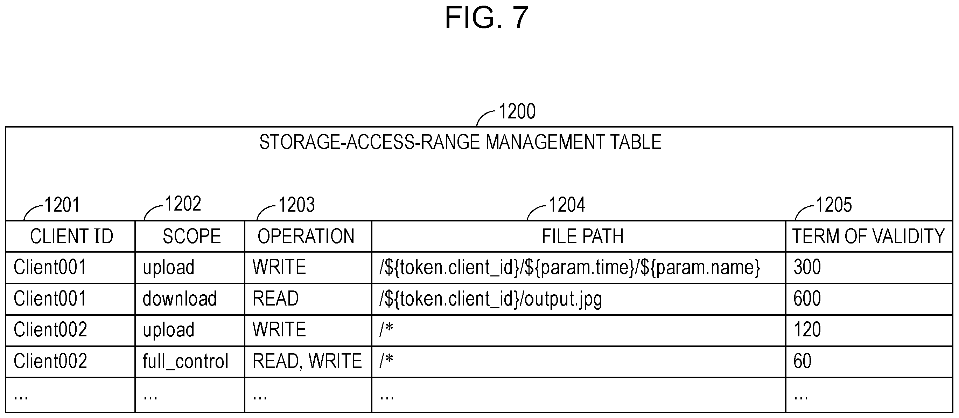

A storage-access-range storing unit 1106 stores setting information of a storage access range. Fig. 7 illustrates a storage-access-range management table 1200 according to the present embodiment.

The storage-access-range management table 1200 is stored in the storage-access-range storing unit 1106, and is used to manage storage access rights. As illustrated in the figure, the storage-access-range management table 1200 describes the range of storage permission which corresponds to the scope in an authorization token. The storage-access-range management table 1200 has scope 1202 associated with a client ID 1201 corresponding to an authorization token. As the range of access to the storage server 105 which corresponds to the scope 1202, an operation 1203 and a file path 1204 are associated. The operation 1203 indicates operations for the storage server 105. The name of an operation is defined by the storage server 105. For example, it is assumed that READ indicates reading from the storage server 105, and that WRITE indicates writing to the storage server 105. Association between a string which is set for the operation 1203 and an operation for the storage server 105 may be managed separately, and the operation 1203 may use an original string defined by the access-right intermediary server 103.

In the file path 1204, a file path of the storage server 105 for which access is permitted is written. A directory and a file name of the storage server 105 may be set in the file path 1204. Further, in the file path 1204, two types of valuables may be used as setting values. One of the two types of valuables indicates information associated with an authorization token, and is expressed in a format of ${token.attribute_name}. The other of the two types of valuables indicates information which may be specified from any information included in a request for issue of a storage access right, and is expressed in a format of ${param.parameter_name}. By using the two types of valuables, a path on the storage server 105 may be set by using a combination of information about an authorization token issued by the authentication authorization server 102 and information which may be set using any information obtained in acquisition of a storage access right. For example, information associated with an authorization token may be specified in the upper portion of the file path 1204, and information which may be specified from any information included in a request for issue of a storage access right may be specified in the lower portion. In this specification method, the upper path of the storage server 105 which is allowed to be accessed is determined on the basis of information managed by the authentication authorization server 102. Therefore, paths accessed by a client which obtains a storage access right may be restricted. Thus, a situation arises in which the client accesses only paths under a specific path. Therefore, the access right to the storage server 105 may be limited to the minimum necessary right. Further, any value which may be specified in submission of a request is set to the lower portion of the path of the storage server 105, enabling fine control of a path according to a process under a specific folder.

In the scope 1202, the operation 1203, and the file path 1204, multiple values may be specified. The formats of the two types of valuables are merely examples. Any format may be employed as long as the valuables are differentiated from each other. The storage-access-range management table 1200 has a term of validity 1205 of a storage access right. The term of validity 1205 is data in which a period during which the storage access right is valid starting from the time point at which the storage access right is issued is expressed in seconds. The term of validity 1205 may be specified by using a unit other than a second, or may be specified by using a specific date, not by using a period. The IP address of the client 101 allowed to use the storage access right may be further specified. The IP address may be specified by using the CIDR (Classless Inter-Domain Routing) format including subnet information.

The storage-access-range management table 1200 having the client ID 1201 may separately manage setting information for each authorized client. Thus, permissions for the storage server 105 which are different from each other though the scope 1202 values are the same may be set for each authorized client.

A communication unit 1107 receives a request for issue of a storage access right via the network 106 from the client 101. When a request for issue of a storage access right is received, the communication unit 1107 notifies the storage-access-right management unit 1101. The communication unit 1107 transmits a response to the received request for issue of a storage access right to the client 101. The communication unit 1107 is used to access the authentication authorization server 102 and the storage-access-right issuing server 104.

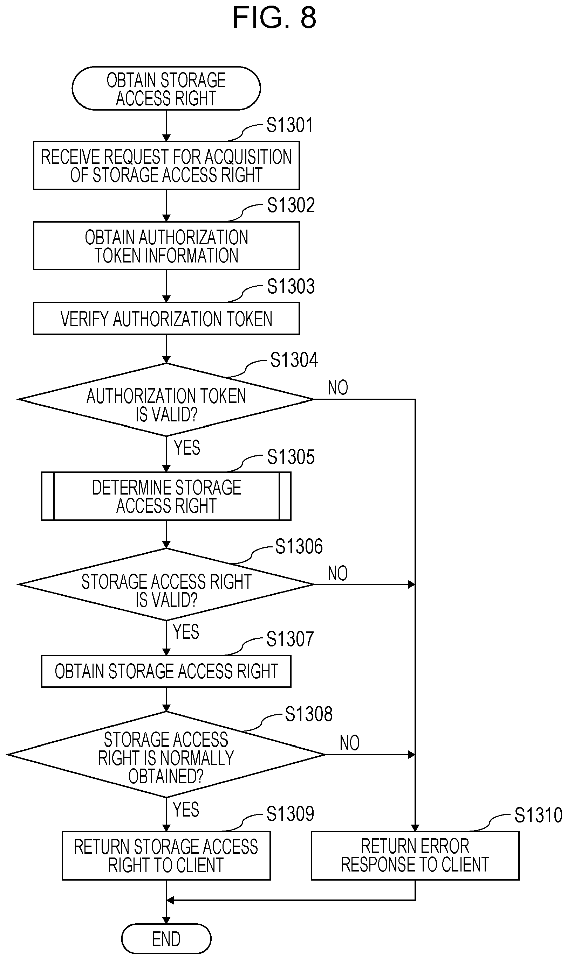

By using Fig. 8, the process flow performed by the storage-access-right management unit 1101 when a request for acquisition of a storage access right is received will be described. A series of processes in Fig. 8 are processes performed after a request for acquisition of a storage access right is transmitted from the client 101 in step S302 in Fig. 3. The steps are performed by the functions illustrated in Fig. 6. Actually, the steps are achieved in such a manner that the CPU 201 stores, in the RAM 203, various computer programs stored in the ROM 202, and executes the various computer programs.

Step S1301 is a step in which the storage-access-right management unit 1101 receives a request for acquisition of a storage access right which is transmitted from the communication unit 1107. The request for acquisition of a storage access right includes an authorization token issued by the authentication authorization server 102. An example of the request for acquisition of a storage access right is illustrated in Fig. 5(c), as described above.

Step S1302 is a step in which the authorization-token information acquiring unit 1103 obtains information about the authorization token included in the request for acquisition of a storage access right. The authorization-token information acquiring unit 1103 transmits a request for acquisition of authorization token information, to the authentication authorization server 102, and obtains authorization token information as a response to the request. The authorization token information includes a term of validity of the authorization token and a permission range of the authorization token. The authorization token information includes the client ID of the authorized client for which the authorization token has been issued, and the user ID of a user who has permitted issue of the authorization token. The request for acquisition of authorization token information includes at least the value of the authorization token.

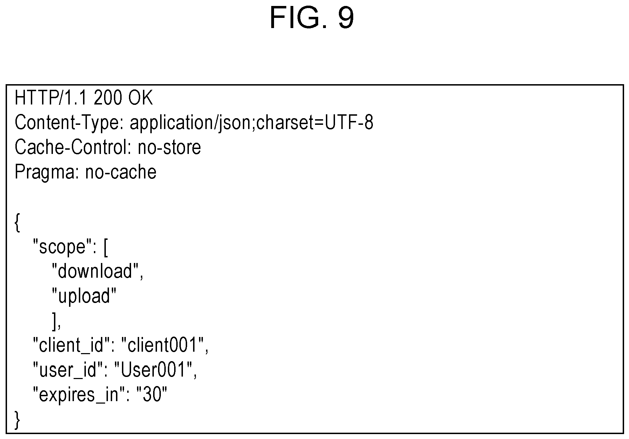

When the authentication authorization server 102 receives the request for acquisition of authorization token information, the authentication authorization server 102 refers to the authorization token management table 600 to check whether or not the authorization token included in the request for acquisition of authorization token information is present. When the target authorization token is not present in the authorization token management table 600, the authentication authorization server 102 transmits a response indicating that the authorization token is not present. Even in the case where the target authorization token is present in the authorization token management table 600, when the expiration date and time 602 of the authorization token has come, the authentication authorization server 102 transmits a response indicating that the expiration date and time has come. In the case where the target authorization token is present in the authorization token management table 600 and where the expiration date and time 602 has not come, the authentication authorization server 102 transmits information about the authorization token 601 stored in the authorization token management table 600. Fig. 9 illustrates exemplary authorization token information provided by the authentication authorization server 102. In the case where the access-right intermediary server 103 has a function of checking the expiration date and time of an authorization token, even when the expiration date and time 602 of the authorization token has come, the authentication authorization server 102 may transmit the information about the authorization token 601.

Step S1303 is a step in which it is determined whether or not the authorization token received by the storage-access-right management unit 1101 is valid. If the authorization-token information acquiring unit 1103 normally obtains authorization token information from the authentication authorization server 102, it is determined that the authorization token is valid. If the authorization token information is not normally obtained, it is determined that the authorization token is not valid. The case in which the authorization token information is not normally obtained is a case in which the expiration date and time of the authorization token has come, or a case in which an authorization token which is not registered in the authorization token management table 600 has been transmitted.

Step S1304 is a step in which the process branches on the basis of the determination as to whether or not the authorization token is valid. If it is determined that the authorization token is valid in step S1303, the process proceeds to step S1305. If it is determined that the authorization token is not valid, the process proceeds to step S1310.

Step S1305 is a step in which the storage-access-range determining unit 1104 determines the permission range of a storage access right that is to be issued. The detail of the process in this step will be described below.

Step S1306 is a step in which the storage-access-range determining unit 1104 determines whether or not the permission range of the storage access right which is determined in step S1305 is valid. The determination as to whether or not the permission range of the storage access right is valid is made on the basis of a permission range policy. An example of the permission range policy is a policy in which it is determined that the storage access right is not valid when the storage access right encompasses an access right to a specific file path. Another is a policy in which it is determined that the storage access right is not valid when the variables defined in the file path 1204 in the storage-access-range management table 1200 have not been converted. Application of the permission range policy may be made for the entire access-right intermediary server 103, or whether or not the permission range policy is to be applied may be determined for each client ID 1201 in the storage-access-range management table 1200. A setting for the storage-access-range determining unit 1104 may be used to switch a mode determining whether or not determination as to whether or not the permission range of the storage access right is valid is to be made.

In this step, if it is determined that the storage access right given by the storage-access-range determining unit 1104 is valid, the process proceeds to step S1307. If it is determined that the storage access right given by the storage-access-range determining unit 1104 is not valid, the process proceeds to step S1310 described above.

Step S1307 is a step in which the storage-access-right acquiring unit 1102 obtains a storage access right from the storage-access-right issuing server 104. The storage-access-right acquiring unit 1102 obtains a storage access right by using a function of issuing a storage access right which is provided for the storage-access-right issuing server 104. The storage-access-right acquiring unit notifies the storage-access-right management unit 1101 of the result of acquisition of a storage access right.

Step S1308 is a step in which it is determined whether or not the storage access right is normally obtained. If the storage access right is normally obtained, the process proceeds to step S1309. If the storage access right is not normally obtained, the process proceeds to S1310 described above.

Step S1309 is a step in which the storage-access-right management unit 1101 transmits the storage access right obtained in step S1307, to the client 101.

Step S1310 is a step in which the storage-access-right management unit 1101 transmits an error response to the client 101. The error response transmitted in this step may include an error reason that the authorization token is not valid. The error response may include an error reason that the permission range of the storage access right is not valid, or an error reason that a storage access right is not obtained from the storage-access-right issuing server 104. After the process in step S1309 or step S1310, the process in the flow is ended.

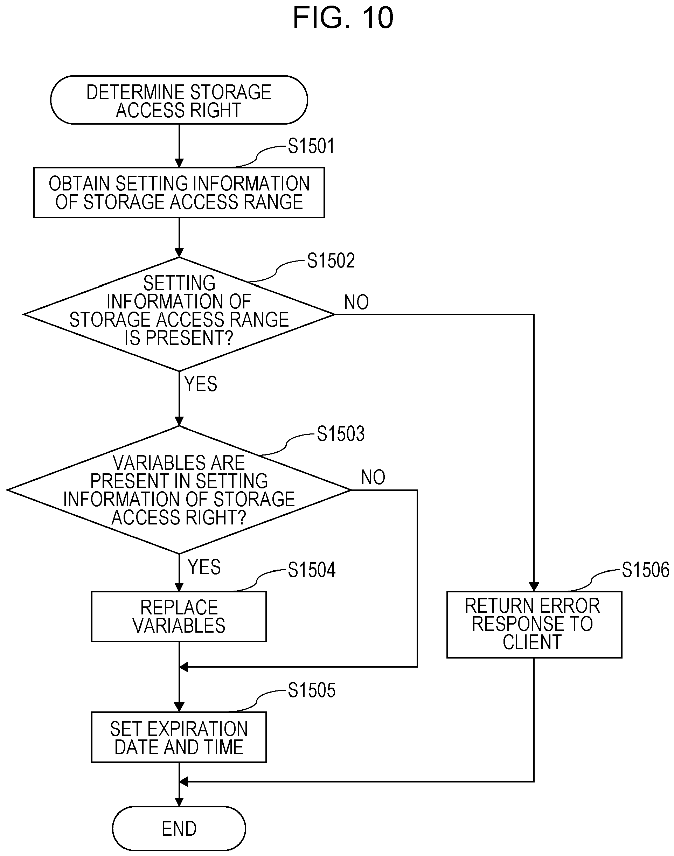

By using Fig. 10, the process flow of determining a storage access right which is performed in step S1305 described above will be described. Actually, the steps are achieved in such a manner that the CPU 201 stores, in the RAM 203, various computer programs stored in the ROM 202, and executes the various computer programs.

Step S1501 is a step in which information about a storage access right is obtained from the storage-access-range management table 1200. In this step, on the basis of the client ID and the scope included in the authorization token information obtained in step S1302, the corresponding operation 1203, the corresponding file path 1204, and the corresponding term of validity 1205 are obtained. In the acquisition, the storage-access-range management table 1200 is referred to.

Among the pieces of scope information included in the authorization token, which scope is scope for which a storage access right is to be obtained may be specified in the request for acquisition of a storage access right which is transmitted from the client 101. In this case, among the pieces of scope information included in the authorization token, the scope specified in the request for acquisition of a storage access right may be used in this step to obtain information about the storage access right from the storage-access-range management table 1200.

Step S1502 is a step in which it is determined whether or not the corresponding client ID 401 and the corresponding scope 403 are present in the storage-access-range management table 1200. If it is determined that the corresponding client ID 401 and the corresponding scope 403 are present, the process proceeds to step S1503. If it is determined that the corresponding client ID 401 and the corresponding scope 403 are not present, the process proceeds to step S1506.

Step S1503 is a step in which it is determined whether or not variables are included in the file path 1204 obtained in step S1501. If variables are included in the file path 1204 obtained in step S1501, the process proceeds to step S1504. If variables are not included, the process proceeds to step S1505.

Step S1504 is a step in which the variables are replaced on the basis of the authorization token information obtained in step S1302. In this step, the authorization token information corresponding to the variables included in the file path 1204 is used to replace the variables. An example in the case where the client ID 1201 is Client001 and the scope 1202 is upload in Fig. 7, and where the authorization token information in Fig. 9 is obtained will be described. In this case, ${token.client_id} included in the file path 1204 is replaced with client001. This is because client001 is included as the data client_id in the authorization token information in Fig. 9. Similarly, on the basis of the values included in the request for acquisition of a storage access right, ${param.time} in the file path 1204 is replaced with 20140930. In addition, ${param.name} is replaced with image001.jpg. Therefore, the file path 1204 obtained through the replacement is /client001/20140930/image001.jpg.

Step S1505 is a step in which the expiration date and time of the storage access right is determined. In this step, on the basis of the term of validity 1205 obtained in step S1501, the date and time when the term of validity 1205 elapses from the current time is used as the expiration date and time of the storage access right.

Step S1506 is a step in which an error response is transmitted to the client 101. The error response transmitted in step S1506 may include an error reason that the corresponding client ID 401 and the corresponding scope 403 are not present in the storage-access-range management table 1200. It is assumed that an error response is transmitted in this step. Alternatively, a default setting which is used when a necessary setting is not present may be registered in the storage-access-range management table 1200. The default setting may be used as the storage access right. After the process in step S1505 or step S1506, the entire process is ended.

As described above, the access-right intermediary server 103 according to the present embodiment may mediate an access right to the storage server 105 on the basis of an authorization token issued by the authentication authorization server 102. Through mediation, the authentication authorization server 102 is capable of controlling the permission range of an access right to the storage server 105, and of issuing an adequate access right to the storage server 105. Further, it is possible to issue an access right to the storage server 105 in accordance with a process that is to be performed by the client 101. Therefore, the client 101 is provided with the minimum necessary access right, and provision of excessive permission may be avoided.

### (SECOND EMBODIMENT)

In the first embodiment, the example in which the access-right intermediary server 103 obtains a storage access right every time the access-right intermediary server 103 receives a request for acquisition of a storage access right is indicated. In the present embodiment, the access-right intermediary server temporarily caches a storage access right. The present embodiment has a configuration similar to that of the first embodiment. The difference between the present embodiment and the first embodiment will be described below.

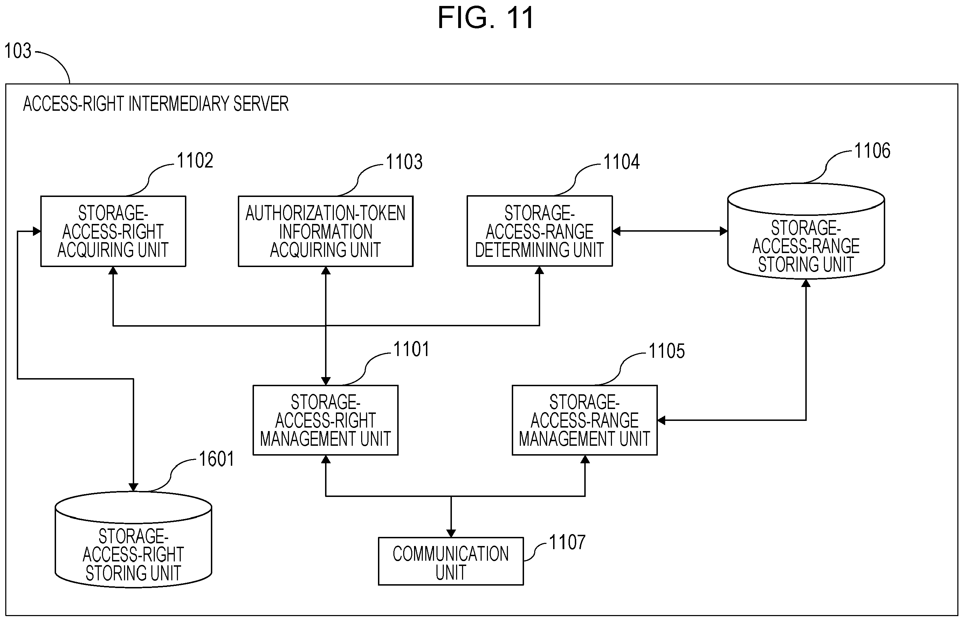

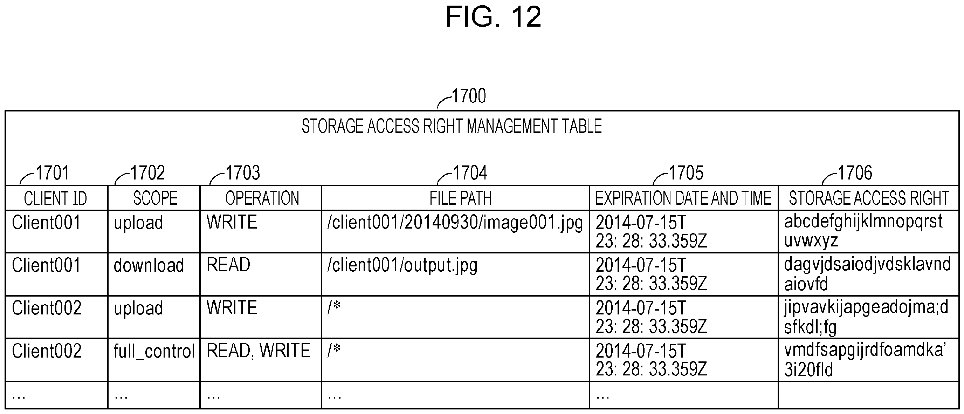

Fig. 11 illustrates an exemplary configuration of the functions of the access-right intermediary server 103 according to the present embodiment. The access-right intermediary server 103 according to the present embodiment includes a storage-access-right storing unit 1601, and temporarily stores storage access rights obtained from the storage-access-right issuing server 104. The storage-access-right storing unit 1601 has a storage access right management table 1700 illustrated in Fig. 12, and stores a storage access right for each data set which is constituted by an authorized client and scope and which is used to obtained the storage access right.

As illustrated, the storage access right management table 1700 is a table for managing obtained storage access rights. The storage access right management table 1700 has scope 1702 associated with a client ID 1701 corresponding to an authorization token. As an access range of the storage server 105 which corresponds to the scope 1702, an operation 1703 and a file path 1704 are associated. Further, a storage access right 1705 and an expiration date and time 1705 for the storage access right 1706 are associated. The expiration date and time 1705 indicates a date and time when the storage access right 1706 becomes invalid. The storage access right 1705 may be encrypted and stored, not in plain text. The expiration date and time 1705 may be stored by using a date and time in the time zone used by the access-right intermediary server 103 or the client 101.

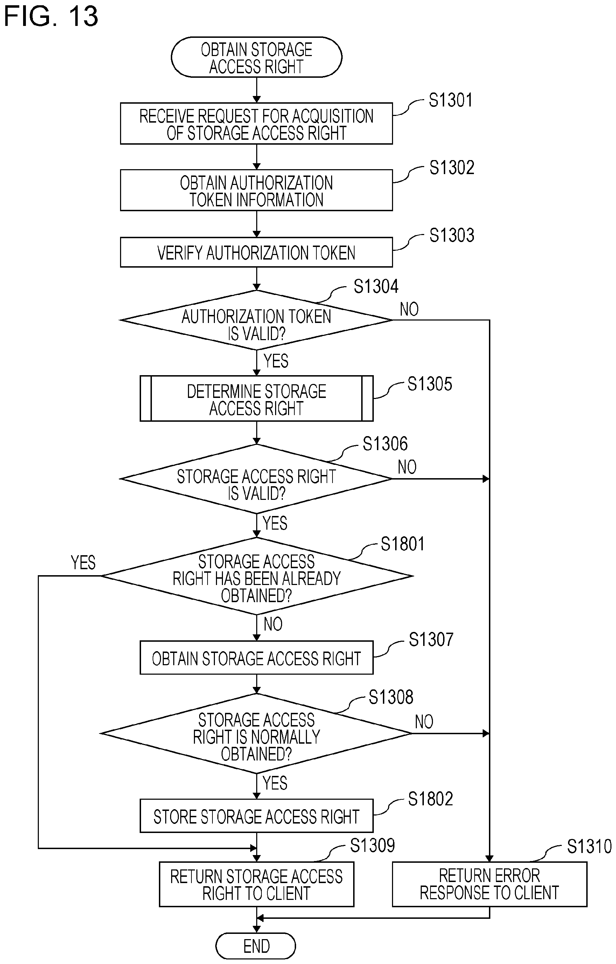

By using Fig. 13, the process flow performed by the storage-access-right management unit 1101 when a request for acquisition of a storage access right is received will be described. The processes in Fig. 13 are almost the same as those in Fig. 8 according to the first embodiment. Only the differences will be described.

Actually, the steps are achieved in such a manner that the CPU 201 stores, in the RAM 203, various computer programs stored in the ROM 202, and executes the various computer programs.

Step S1801 is a step in which an inquiry about whether or not a storage access right corresponding to the storage access right to be obtained has been already obtained is transmitted to the storage-access-right storing unit 1601. When the inquiry is transmitted, the storage-access-right storing unit 1601 checks the following point. That is, the storage-access-right storing unit 1601 checks whether or not a storage access right having a client ID, scope, an operation, and a file path which match those of the authorized client of the storage access right to be obtained is present in the storage access right management table 1700. If such a storage access right is present, the storage-access-right storing unit 1601 checks the expiration date and time. If the storage access right is not expired, the storage access right is regarded as being obtained, and the value of the storage access right is returned to the storage-access-right acquiring unit. Even in the case where the storage access right is not expired, only when a certain period or more remains until the expiration date and time comes, it may be determined that the storage access right has been obtained. After the above-described process, if the storage access right has been obtained, the process proceeds to step S1309. If the storage access right has not been obtained, the process proceeds to step S1307.

Step S1802 is a step in which the storage-access-right storing unit 1601 stores the obtained storage access right. The obtained storage access right is recorded as cache in the storage access right management table 1700. When a request for acquisition of the same storage access right is transmitted, the storage access right may be obtained by referring to the storage access right management table 1700.

As described above, the access-right intermediary server according to the present embodiment does not need to obtain a storage access right from the storage-access-right issuing server 104 every time. Thus, the time until completion of the process in Fig. 13 is decreased, enabling a response to a request for acquisition of a storage access right to be quickly returned to the client 101.

### (THIRD EMBODIMENT)

The present embodiment describes a process performed when the access-right intermediary server 103 receives a request for change in a storage access range.

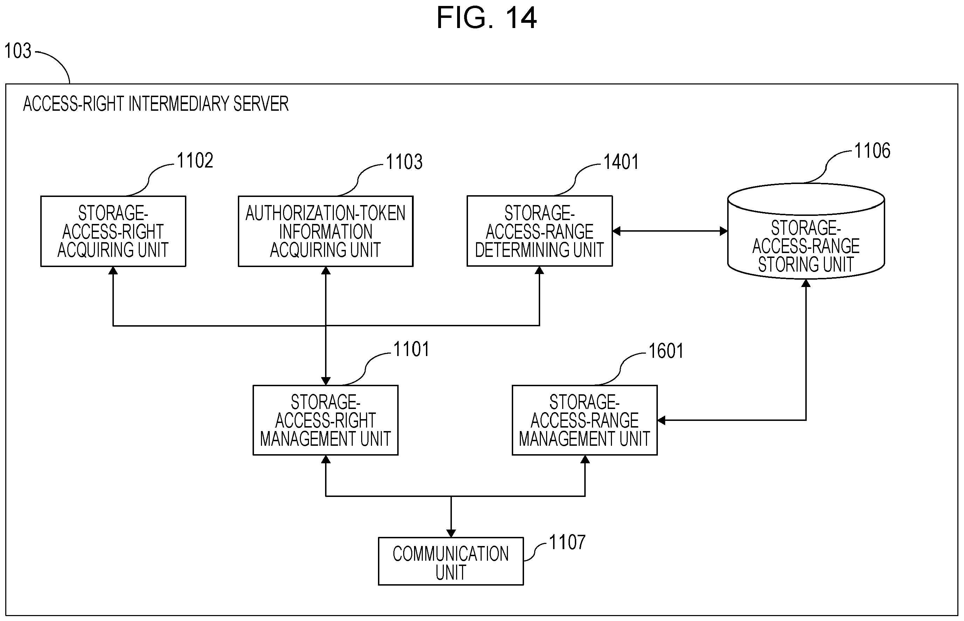

Fig. 14 illustrates an exemplary functional configuration of the access-right intermediary server 103 according to the present embodiment. The access-right intermediary server 103 according to the present embodiment includes a storage-access-range management unit 1401. The storage-access-range management unit 1401 adds, deletes, and changes information stored in the storage-access-range setting information 1106. The communication unit 1107 receives a request for change in a storage access range, and notifies the storage-access-range management unit 1401 of the received request for change in a storage access range. The storage-access-range management unit 1401 changes information stored in the storage-access-range management table 1200 on the basis of the request for change in a storage access range.

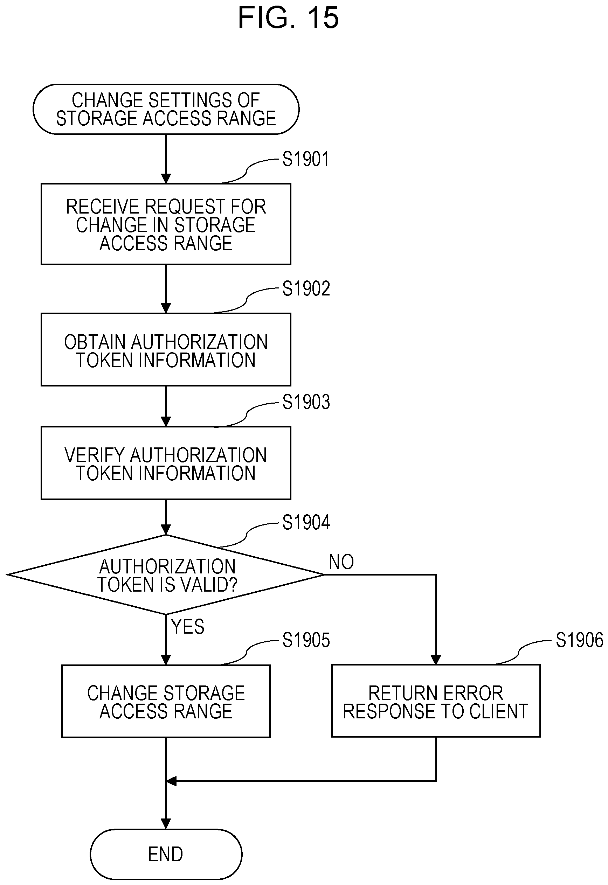

Fig. 15 illustrates the process flow performed by the storage-access-range management unit 1401 when a request for change in a storage access range is received, according to the present embodiment.

Actually, the steps are achieved in such a manner that the CPU 201 stores, in the RAM 203, various computer programs stored in the ROM 202, and executes the various computer programs.

Step S1901 is a step in which a request for change in a storage access range which is transmitted from the communication unit 1107 is received. The request for change in a storage access range includes the authorization token issued by the authentication authorization server 102, and information about the change in a storage access range.

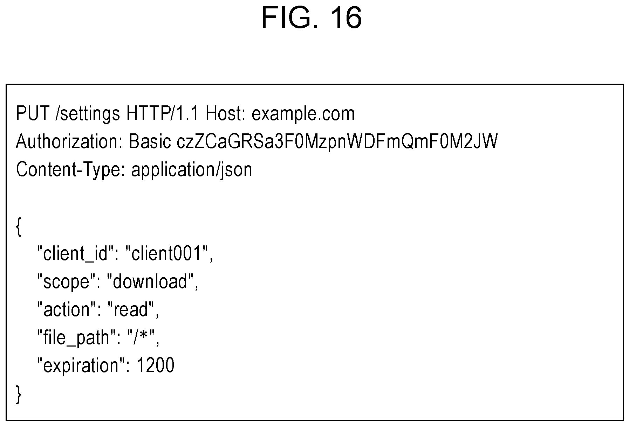

Fig. 16 illustrates an exemplary request for change in a storage access range in the case where the storage access range is to be modified. The request for change in a storage access range has attributes corresponding to information stored in the storage-access-range management table 1200. The request for change in a storage access range may include all of the items stored in the storage-access-range management table 1200, or may include only attributes necessary to be changed.

Step S1902 is a step in which information about the authorization token included in the request for change in a storage access range is obtained. The authorization-token information acquiring unit 1103 transmits a request for acquisition of authorization token information, to the authentication authorization server 102, and obtains authorization token information. The request for acquisition of authorization token information includes the value of the authorization token.

Step S1903 is a step in which whether or not the authorization token obtained in step S1902 is valid is verified. By using the verification result, in step S1904, it is determined whether or not the authorization token is valid. If the authorization token information is not normally obtained in step S1902, it is determined that the authorization token is not valid. If the authorization token information is normally obtained, it is checked if the client ID and the scope of the authorized client included in the authorization token information match those included in the request for change in a storage access range. If the matching is successfully performed, it is determined that the authorization token is valid. If it is determined that the authorization token is valid, the process proceeds to step S1905. If the matching is not successfully performed, it may be deemed that a try at changing settings of an authorized client different from the authorized client which has transmitted the request for change in a storage access range is made. Therefore, it is determined that the authorization token is not valid. If it is determined that the authorization token is not valid, the process proceeds to step S1906.

Step S1905 is a step in which information about the received request for change in a storage access range is used to change information for the corresponding authorized client and the corresponding scope in the storage-access-range management table 1200. In step S1906, an error response is returned to the client 101. After the process in step S1905 or step S1906, the entire process is ended.

In the process in Fig. 15, an example of changing existing settings is illustrated. In addition, a setting may be deleted or a new setting may be created. When a setting is to be deleted, for example, the verb part in HTTP in Fig. 16 may be changed to DELETE. When a new setting is to be created, the verb part in HTTP may be changed to POST.

The request for change in a storage access range includes an authorization token. Instead, information indicating an authentication result using a user ID and a password may be transmitted. Further, permission to change the storage access range may be given only to a specific user group to which the user belongs.

As described above, the access-right intermediary server according to the present embodiment enables a user to change setting information of a storage access range managed by the storage-access-range management table 1200. Thus, settings for an access right to the storage server 105 may be changed when necessary. Therefore, an access right to the storage server 105 may be managed in an appropriate range.

When a setting in the storage-access-range management table 1200 is to be changed, it is checked if the user is allowed to change the setting in the storage-access-range management table 1200. Therefore, it is difficult for a user who is not valid to tamper with a setting in the storage-access-range management table 1200.

### (OTHER EMBODIMENTS)

The present invention may be achieved through a process in which a program achieving one or more functions of the above-described embodiments is supplied to a system or an apparatus via a network or a storage medium and in which one or more processors in a computer of the system or the apparatus read and execute the program. In addition, the present invention may be achieved through a circuit (for example, an ASIC) achieving one or more functions.

The present invention is not limited to the above-described embodiments. Without departing from the spirit and the scope of the present invention, various changes and modifications may be made. Therefore, to apprise the public of the scope of the present invention, the following claims are attached.

### Reference Signs List

- 1102: storage-access-right acquiring unit
- 1103: authorization-token information acquiring unit
- 1104: storage-access-range determining unit
- 1107: communication unit

## Claims

1. An information processing apparatus which is capable of communicating with a client, the client accessing a storage server and a first server which is different from the storage server, the information processing apparatus comprising:
receiving means for receiving information about a first access right from the client, the information about the first access right being used for the client to access the first server;
generating means for generating information about a second access right on the basis of the information about the first access right, the information about the second access right being used for the client to access the storage server; and
transmitting means for transmitting the information about the second access right to the client.

2. The information processing apparatus according to Claim 1,
wherein the information about the first access right includes information indicating a client ID of the client and a term of validity of the access right.

3. The information processing apparatus according to Claim 1 or 2,
wherein the information about the second access right includes information about a file path allowed to be accessed in a storage of the storage server.

4. The information processing apparatus according to any one of Claims 1 to 3,
wherein the generating means transmits an inquiry based on the information about the first access right, to a management server which manages an access right to the storage server, and generates the information about the second access right on the basis of a response to the inquiry.

5. The information processing apparatus according to any one of Claims 1 to 4, further comprising:
holding means for holding correspondence information between the information about the first access right and the information about the second access right,
wherein the generating means refers to the correspondence information so as to generate the information about the second access right.

6. The information processing apparatus according to any one of Claims 1 to 5, further comprising:
second receiving means for receiving a change request for changing the information about the second access right from the client,
wherein the generating means generates the information about the second access right on the basis of the change request, the information about the second access right being used for the client to access the storage server.

7. An information processing system comprising:
a storage server;
a first server different from the storage server;
a client that accesses the storage server and the first server; and
an information processing apparatus that is capable of communicating with the client,
wherein the information processing apparatus includes
receiving means for receiving information about a first access right from the client, the information about the first access right being used for the client to access the first server,
generating means for generating information about a second access right on the basis of the information about the first access right, the information about the second access right being used for the client to access the storage server, and
transmitting means for transmitting the information about the second access right to the client.

8. A control method for an information processing apparatus which is capable of communicating with a client, the client accessing a storage server and a first server different from the storage server, the method comprising the steps of:
by using receiving means, receiving information about a first access right from the client, the information about the first access right being used for the client to access the first server;
by using generating means, generating information about a second access right on the basis of the information about the first access right, the information about the second access right being used for the client to access the storage server; and
by using transmitting means, transmitting the information about the second access right to the client.

9. A computer program which causes a computer to function as an information processing apparatus which is capable of communicating with a client, the client accessing a storage server and a first server which is different from the storage server, the information processing apparatus comprising:
receiving means for receiving information about a first access right from the client, the information about the first access right being used for the client to access the first server;
generating means for generating information about a second access right on the basis of the information about the first access right, the information about the second access right being used for the client to access the storage server; and
transmitting means for transmitting the information about the second access right to the client.
